(19) **Europäisches Patentamt / European Patent Office / Office européen des brevets**

(11) **EP 4 576 234 A1**

(12) **EUROPEAN PATENT APPLICATION**

(43) Date of publication:
**25.06.2025 Bulletin 2025/26**

(21) Application number: **24166387.1**

(22) Date of filing: **26.03.2024**

(51) International Patent Classification (IPC):
**H01M 4/04** (2006.01) **H01M 4/139** (2010.01)
**H01M 10/0525** (2010.01) **H01M 4/131** (2010.01)
**H01M 4/02** (2006.01)

(52) Cooperative Patent Classification (CPC):
**H01M 10/0525; H01M 4/0421; H01M 4/131;**
**H01M 4/139;** H01M 2004/021; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 CN 202311785825**

(71) Applicant: **Eve Power Co., Ltd.
Jingmen, Hubei 448000 (CN)**

(72) Inventors:
- **CHENG, Qingshun**
  **Jingmen, 448000 (CN)**
- **XIAO, Tao**
  **Jingmen, 448000 (CN)**
- **SU, Bin**
  **Jingmen, 448000 (CN)**
- **CHEN, Liquan**
  **Jingmen, 448000 (CN)**

(74) Representative: **Murgitroyd & Company
165-169 Scotland Street
Glasgow G5 8PL (GB)**

(54) **COMPOSITE ELECTRODE, MANUFACTURING METHOD THEREOF, AND LITHIUM-ION BATTERY**

(57) A composite electrode, a manufacturing method thereof, and a lithium-ion battery are provided. The composite electrode includes a current collector; and a composite material layer disposed on at least one side surface of the current collector. The composite material layer comprises n-layer active substance layers and n-1-layer lithium supplement layers that are stacked at intervals, in which n is greater than or equal to 3 and n is an integer. A side of the composite material layer which is adjacent to the current collector is one of the n-layer active substance layers. Porosity of the n-1-layer lithium supplement layers gradually increases along a direction away from the current collector.

FIG. 1

**Description**

TECHNICAL FIELD

The present application relates to the field of battery technologies, such as a composite electrode, a manufacturing method thereof, and a lithium-ion battery.

BACKGROUND

In the formation of the lithium-ion battery, the Solid Electrolyte Interface (referred briefly to as SEI) film is formed by using a part of the initial lithium ions inside the battery, thereby causing problems such as loss of the initial capacity of the lithium-ion battery and reduction of the cycle life thereof, which limits the increase of the energy density of the lithium-ion battery. To compensate for the loss of this part of lithium ions, lithium supplementation is typically carried out.

Currently, a lithium supplementing method used for a negative electrode mainly includes lithium supplementation by spraying an ultra-fine metallic lithium powder on the surface of the negative electrode, and forming the ultra-fine lithium powder into a slurry to be sprayed on the surface of the negative electrode; or lithium supplementation by calendering and compounding on the ultra-thin lithium strip and the negative electrode. However, the above-mentioned lithium supplementing methods may lead to poor uniformity via lithium supplementation, and the rate of infiltration of the lithium supplement agent into the interior of the electrode is relatively slow, which may limit the supplementation rate and the supplementation efficiency of the lithium ions. So, the effect of lithium supplementation is reduced. The lithium supplementation for the positive electrode has a main manner of adding the lithium-rich compound, such as $Li_2NiO_2$, $Li_5FeO_4$, $Li_3N$, $Li_2O_2$, or $Li_2S$, to the active substances of the positive electrode. However, the non-uniform mixing may result in non-uniform distribution of lithium elements in the battery, which may result in over-supplementation of lithium elements in some areas and insufficient supplementation of lithium elements in other areas. Thus, the performance and the lifetime of the battery may be affected. In addition, when the lithium supplement agent is mixed with the active material of the positive electrode, side reactions may occur, thereby resulting in the generation of some undesirable chemical substances, which may negatively affect the electrochemical performance of the battery.

Therefore, there is an urgent need to provide a lithium supplementing method that can improve the supplementing rate and the supplementing efficiency of the lithium supplement agent, improve the uniformity of the lithium supplementation, and avoid side reactions resulting from the mixture of the lithium supplement agent and the active material of the electrode.

SUMMARY

The following is a brief summary of the subject matter described in detail herein. This summary is not intended to limit the protection scope of the claims.

It is provided a composite electrode, a manufacturing method thereof, and a lithium-ion battery according to some embodiments of the present application. According to the composite electrode of the present application, n-layer active substance layers and n-1-layer lithium supplement layers are alternately stacked, and one side of the composite material layer which is adjacent to the current collector is defined as the active substance layer. In this way, multiple lithium supplement layers are provided inside the composite material layer at intervals, and the lithium supplement layer is in closer contact with the active substance layer, so that the diffusion path of the lithium ions is shorter, and the diffusion rate of the lithium ions can be accelerated, which helps to improve the rate and the efficiency of the lithium supplementation, improves the uniformity via the lithium supplementation, and avoids side reactions caused by the direct mixing of the lithium supplementing material and the active material.

In a first aspect, it is provided a composite electrode according to embodiments of the present application, and the composite electrode includes a current collector, and a composite material layer disposed on at least one side surface (e.g., one side surface or two side surfaces) of the current collector, in which the composite material layer includes n-layer active substance layers and n-1-layer lithium supplement layers that are stacked at intervals, n is greater than or equal to 3 and n is an integer (e.g., n may be 3, 4, 5, 6, 8, 10, 12 or 15);

a side of the composite material layer which is adjacent to the current collector is one of the n-layer active substance layers;

porosity of the n-1-layer lithium supplement layers gradually increases along a direction away from the current collector.

It should be noted that the composite electrode may be a positive composite electrode or a negative composite electrode.

According to the composite electrode of the present application, n-layer active substance layers and n-1-layer lithium supplement layers are alternately stacked, and one side of the composite material layer which is adjacent to the current collector is defined as the active substance layer. In this way, multiple lithium supplement layers are provided inside the composite material layer at intervals, and the lithium supplement layer is in closer contact with the active substance layer, so that the diffusion path of the lithium ions is shorter, and the diffusion rate of the lithium ions can be accelerated, which helps to improve the rate and the efficiency of the lithium supplementation, improves the uniformity via the lithium supplementation, and avoids side reactions caused by the direct mixing of the lithium supplementing material and the active material. By enabling the porosity of the n-1-layer lithium supplement layers to increase gradually along in the direction away from the current collector, lithium ions can be better intercalated from the surface of the electrode to the inside of the electrode or reversely extracted. Therefore, by using the composite electrode according to embodiments of the present application, it can reduce the initial capacity loss and improve the cycle performance, thereby increasing the energy density.

In some embodiments, porosity of each of the n-layer active substance layers ranges from 35% to 45%, such as 35%, 36%, 37%, 38%, 39%, 40%, 41%, 42%, 43%, 44% or 45%.

In some embodiments, porosity of the n-layer active substance layers increases gradually in the direction away from the current collector.

In the present application, when the porosity of the n-layer active substance layers gradually increases along the direction away from the current collector, it can improve transmission and diffusion of the ions, increase the utilization of active substances, and reduce the internal resistance of the battery.

In the present application, by designing different layers and different pore structures of the active substance layer and the lithium supplement layer, the path and the speed of the ion diffusion can be optimized, and the charge and discharge rate and the cycle life of the battery can be improved.

In some embodiments, active material of the n-layer active substance layers includes active substances and conductive agents.

In some embodiments, the active substances include positive active substances or negative active substances.

This application does not specifically limit the types of positive active substances, including but not limited to lithium iron phosphate, Lithium nickel manganese cobalt oxides (NMC) or manganate lithium salts, etc.

This application does not specifically limit the types of negative active substances, including but not limited to graphite, silicone carbon, or lithium titanate.

In some embodiments, a mass content of each layer of the active substances ranges from 96% to 98%, e.g., 96%, 97% or 98%, based on a total mass of each of the n-layer active substance layers being 100%.

In some embodiments, content of the active substances of the n-layer active substance layers gradually increases in the direction away from the current collector.

In the present application, when the content of the active substances of the n-layer active material layers gradually increases along the direction away from the current collector, the reaction rate of the electrode can be increased, materials can be utilized more effectively, and costs can be reduced.

In some embodiments, the active substances each have a particle size D50 ranging from 0.4 micrometer ($\mu$m) to 20$\mu$m, e.g., 0.4$\mu$m, 0.8$\mu$m, 1.2$\mu$m, 1.6$\mu$m, 2$\mu$m, 5$\mu$m, 8$\mu$m, 11$\mu$m, 14$\mu$m, 17$\mu$m or 20$\mu$m; and the conductive agents each have a particle size in a range of 0.01-0.1$\mu$m.

In some embodiments, particle sizes D50 of the active substances of the n-layer active substance layers gradually increase in the direction away from the current collector.

In the present application, when the particle sizes D50 of the active substances of the n-layer active substance layers gradually increase in the direction away from the current collector, the reaction rate of the electrode can be increased and the energy density thereof can be increased.

In some embodiments, a thickness of each of the n-layer active substance layers ranges from 3$\mu$m to 30$\mu$m, e.g., 3$\mu$m, 5$\mu$m, 7$\mu$m, 9$\mu$m, 11$\mu$m, 13$\mu$m, 15$\mu$m, 17$\mu$m, 19$\mu$m, 21$\mu$m, 23$\mu$m, 25$\mu$m, 27$\mu$m, 29$\mu$m or 30$\mu$m.

In some embodiments, thicknesses of the n-layer active substance layers gradually increase in the direction away from the current collector.

In the present application, when thicknesses of the n-layer active substance layers gradually increase in the direction away from the current collector, the energy density of the battery may be increased and the internal resistance of the battery may be reduced.

In the present application, the composition and the structure of the active material layer and the lithium supplement layer can be precisely controlled according to needs and performance requirements for the specific battery. By adjusting the material combination, thickness, porosity and content of each layer, the capacity and the cycle life, and other electrochemical properties of the electrode can be customized.

In some embodiments, porosity of each of the n-1-layer lithium supplement layers ranges from 5% to 20%, such as 5%, 7%, 9%, 10%, 12%, 14%, 16%, 18% or 20%.

In the present application, the lithium supplementing material filled in the lithium supplement layer is relatively dense.

In some embodiments, lithium supplementing materials in the n-1-layer lithium supplement layers each include metallic lithium or a lithium-containing compound.

In the present application, when the active substance is a positive active substance, the lithium-containing compound is a lithium supplementing material. When the active substance is a negative active substance, the metallic lithium is a lithium supplementing material.

Optionally, the lithium-containing compound includes at least one of $Li_2NiO_2$, $Li_5FeO_4$, $Li_3N$, $Li_2O_2$ or $Li_2S$.

In some embodiments, the lithium supplementing material in the lithium supplement layer has a particle size D50 ranging from $0.01\mu m$ to $15\mu m$, such as $0.01\mu m$, $0.02\mu m$, $0.05\mu m$, $0.08\mu m$, $0.1\mu m$, $0.12\mu m$, $0.15\mu m$, $0.2\mu m$, $0.5\mu m$, $1\mu m$, $2\mu m$, $3\mu m$, $4\mu m$, $5\mu m$, $6\mu m$, $7\mu m$, $8\mu m$, $9\mu m$, $10\mu m$, $11\mu m$, $12\mu m$, $13\mu m$, $14\mu m$ or $15\mu m$.

In some embodiments, particle sizes of lithium supplementing materials of the n-1-layer lithium supplement layers gradually increase in the direction away from the current collector.

In the present application, when particle sizes of lithium supplementing materials of the n-1-layer lithium supplement layers gradually increase in the direction away from the current collector, the cycle life and the stability of the battery can be improved, and the capacity attenuation of the battery can be reduced.

In some embodiments, a thickness of each of the n-1-layer lithium supplement layers ranges from $0.02\mu m$ to $1\mu m$, such as $0.02\mu m$, $0.03\mu m$, $0.05\mu m$, $0.07\mu m$, $0.1\mu m$, $0.12\mu m$, $0.2\mu m$, $0.3\mu m$, $0.4\mu m$, $0.5\mu m$, $0.6\mu m$, $0.7\mu m$, $0.8\mu m$, $0.9\mu m$ or $1\mu m$.

In the present application, if the thickness of each lithium supplement layer is too thin, it will lead to capacity loss of the battery, the reduced cycle life of the battery, and unstable performance of the battery. If the thickness of each lithium supplement layer is too thick, the energy density of the battery will be reduced, the weight of the battery will be increased, and the cost of the battery will be increased.

In some embodiments, thicknesses of the n-1-layer lithium supplement layers gradually increase in the direction away from the current collector.

In the present application, when the thicknesses of the n-1-layer lithium supplement layers gradually increase in the direction away from the current collector, it can increase the cycle life of the battery, improve the performance stability of the battery, and reduce the degradation rate of electrode materials.

In a second aspect, it is provided a manufacturing method of the composite electrode described in the first aspect according to embodiments of the present application. The manufacturing method includes:

> evaporating and depositing active material onto at least one side surface of a current collector to form an active substance layer;

> evaporating and depositing a lithium supplement agent (i.e., lithium supplement material) onto a surface of the active substance layer to form a lithium supplement layer;

> evaporating and depositing the active material onto a surface of the lithium supplement layer to form an active substance layer; and

> alternately and repeatedly performing an operation of evaporating and depositing a lithium supplement material onto a surface of the active substance layer and an operation of evaporating and depositing the active material onto a surface of the lithium supplement layer at n-2 times (e.g., one time, two times, three times, four times, five times, eight times, ten times, twelve times, or fifteen times) to obtain the composite electrode comprising n-layer active substance layers and n-1-layer lithium supplement layers; in which n is greater than or equal to 3 and n is an integer; and porosity of the n-1-layer lithium supplement layers increases gradually along a direction away from the current collector.

A traditional multi-layer coating process often uses multiple nozzles to spray electrode materials with different components at the same time, and mix them together in a laminar flow to form a multi-layer electrode structure. However, the coating layer formed by spraying is thicker. An overly thick coating layer can easily lead to uneven coating, which will lead to inconsistency in electrode performance and may lead to performance fluctuations and instability of the battery. Also, it will increase the diffusion distances of ions or molecules in the electrode, which results in increased resistance to transporting charges and mass. This may cause the battery's response speed to slow down and reduce the power performance of the battery. Further, it may cause a poor interface between the electrode and the electrolyte, and limit ion transport and charge conduction, which may affect the cycle life and the stability of the battery.

According to this application, it can obtain a uniform active substance layer and a uniform lithium supplement layer through the evaporation deposition, which can distribute lithium ions more evenly, ensure the balanced migration of lithium ions during the charge and discharge process, and improve the cycle life and the performance stability of the battery. A multi-layer composite structure is formed on the surface of the foil through evaporation deposition, thereby achieving refined design at the electrode in terms of layer levels. In addition, the film is coated by evaporation deposition, and the thickness thereof is controllable, And, the evaporation deposition is suitable for a wide range of electrode materials.

Before evaporation deposition, the current collector needs to be pretreated to remove surface dirt, grease, impurities, etc. to ensure that the coating film can evenly adhere to its surface.

In some embodiments, when the active material is evaporated and deposited, a temperature of an evaporation source ranges from 500°C to 2500°C, such as 500°C, 600°C, 700°C, 900°C, 1000°C, 1200°C, 1500°C, 2000°C, 2200°C or 2500°C.

In the application, when the active material is evaporated and deposited, a lower evaporation rate usually helps to form larger particle sizes in a case where the temperature of the evaporation source is lower; and a higher evaporation rate usually results in the formation of small particle sizes in a case where the temperature of the evaporation source is higher. By controlling the evaporation deposition time and the temperature of the evaporation source, the thickness of the active substance layer can be controlled. Evaporation deposition can also be repeated to increase the thickness of the active substance layer.

In some embodiments, when the active material is evaporated and deposited, a distance between a substrate to be evaporated and deposited and the evaporation source ranges from 10 centimeter (cm) to 50 cm, such as 10cm, 20cm, 30cm, 40cm or 50cm.

In some embodiments, when the lithium supplement agent is evaporated and deposited, the temperature of the evaporation source ranges from 500°C to 2500°C, such as 500°C, 600°C, 700°C, 900°C, 1000°C, 1200°C, 1500°C, 2000°C, 2200°C or 2500°C.

In some embodiments, when the lithium supplement agent is evaporated and deposited, the lower evaporation rate usually helps to form larger particle sizes in a case where the temperature of the evaporation source is lower; and the higher evaporation rate usually results in formation of smaller particle sizes in a case where when the temperature of the evaporation source is higher. By controlling the evaporation deposition time and the temperature of the evaporation source, the thickness of the lithium supplement layer can be controlled. Evaporation deposition can also be repeated to increase the thickness of the lithium supplement layer.

In some embodiments, when the lithium supplement agent is evaporated and deposited, the distance between the substrate to be evaporated and deposited and the evaporation source ranges from 10 cm to 50 cm, such as 10cm, 20cm, 30cm, 40cm or 50cm.

In the application, when evaporating and depositing active materials or lithium replenishing agents, the distance between the substrate to be evaporated and deposited and the evaporation source will affect the accumulation and growth behavior of particles. Adjusting the distance between the evaporation source and the substrate can influence the deposition mode and particle sizes of particles. Furthermore, by controlling the temperature of the evaporation source and the distance between the substrate to be evaporated and deposited and the evaporation source, the particle size of the material in the active substance layer or the lithium supplement layer can be changed.

In some embodiments, after each evaporation deposition, inert gas (such as nitrogen) is introduced for cooling and solidification.

Maintaining a certain flow rate of inert gas in the vacuum chamber can accelerate the cooling processes of both the evaporated and deposited substrate and the coating film. This helps stabilize the coating film and ensures the adhesion of this film to the evaporated and deposited substrate.

In a third aspect, it is further provided a lithium-ion battery according to embodiments of the present application. The lithium-ion battery includes the composite electrode described in the first aspect.

The numerical range described in this application not only includes the point values listed above, but also includes any point value between the above-mentioned numerical ranges that are not listed. Due to space limitations and for the sake of conciseness, this application will no longer list exhaustively the specific point values included in the stated ranges.

Compared with the related art, the advantageous effects of the present application are as follows.

According to the composite electrode of the present application, n-layer active substance layers and n-1-layer lithium supplement layers are alternately stacked, and one side of the composite material layer which is adjacent to the current collector is defined as the active substance layer. In this way, multiple lithium supplement layers are provided inside the composite material layer at intervals, and the lithium supplement layer is in closer contact with the active substance layer, so that the diffusion path of the lithium ions is shorter, and the diffusion rate of the lithium ions can be accelerated, which helps to improve the rate and the efficiency of the lithium supplementation, improves the uniformity via the lithium supplementation, and avoids side reactions caused by the direct mixing of the lithium supplementing material and the active material. By enabling the porosity of the n-1-layer lithium supplement layers to increase gradually along in the direction away from the current collector, lithium ions can be better intercalated from the surface of the electrode to the inside of the electrode or reversely extracted. Therefore, by using the composite electrode according to embodiments of the present application, it can reduce the initial capacity loss and improve the cycle performance, thereby increasing the energy density.

Thus, other aspects will become apparent upon reading and understanding the accompanying drawings and the detailed description.

BRIEF DESCRIPTION OF THE DRAWINGS

FIG. 1 is a schematic structural diagram of a composite electrode according to some embodiments of the present application.

FIG. 2 is a flow chart of a manufacturing method of a composite electrode according to some embodiments of the present application.

List of reference signs in the drawings: 1-current collector; 2-first active substance layer; 3-first lithium supplement layer; 4-second active substance layer; 5-second lithium supplement layer; and 6-third active substance layer.

DETAILED DESCRIPTION

The technical solution of the present application will be further described below through specific implementations.

According to some embodiments of the present application, it is provided a manufacturing method of a composite electrode, including steps 1 to 4.

At step 1, active material is evaporated and deposited onto at least one side surface of a current collector to form an active substance layer.

At step 2, a lithium supplement material is evaporated and deposited onto a surface of the active substance layer formed at step 1 to form a lithium supplement layer.

At step 3, the active material is evaporated and deposited onto a surface of the lithium supplement layer formed at step 2 to form an active substance layer.

At step 4, step 2 and step 3 are performed alternately and repeatedly at n-2 times to obtain the composite electrode comprising n-layer active substance layers and n-1-layer lithium supplement layers, in which porosity of the n-1-layer lithium supplement layers increases gradually along a direction away from the current collector. n is greater than or equal to 3 and n is an integer.

Example 1

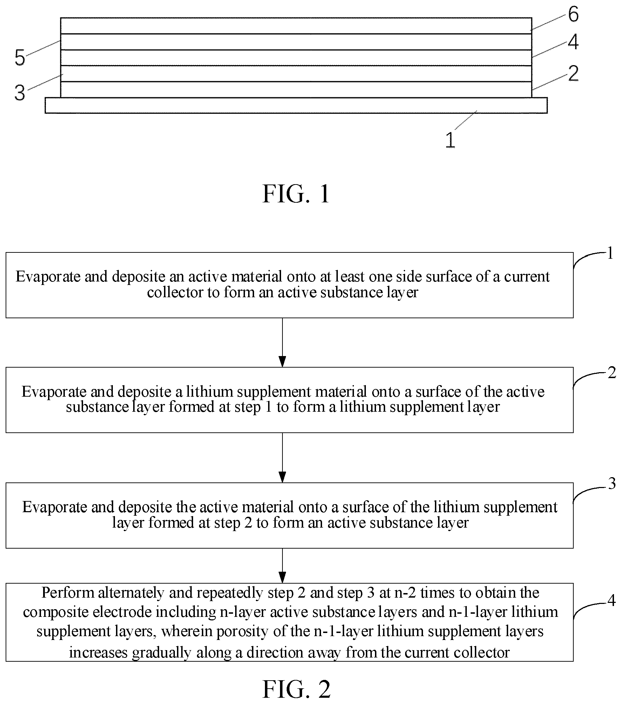

It is provided a composite electrode according to this example, and the composite electrode is a positive electrode, as shown in FIG. 1. The composite electrode includes a current collector 1 (i.e., an aluminum foil) and a composite material layer disposed on two side surfaces of the aluminum foil. The composite material layer includes three active substance layers and two lithium supplement layers alternately stacked. A first active substance layer 2, a first lithium supplement layer 3, a second active substance layer 4, a second lithium supplement layer 5, and a third active substance layer 6 are sequentially arranged in a direction away from the current collector 1.

Each active substance layer includes lithium iron phosphate positive active substances and carbon black conductive agents. The mass contents of the active substances in the first active substance layer 2, the second active substance layer 4 and the third active substance layer 6 are 96%, 97% and 98%, respectively. A particle size D50 of the active substance in the first active substance layer 2, a particle size D50 of the active substance in the second active substance layer 4 and a particle size D50 of the active substance in the active substance in the third active substance layer 6 are 0.6 $\mu$m, 1 $\mu$m and 1.4 $\mu$m, respectively. A particle size of the carbon black conductive agent in each of the three active substance layers ranges from 0.01 $\mu$m to 0.1 $\mu$m. "D50" refers to a particle size corresponding to when a volume distribution percentage of a cumulative particle size of a sample reaches 50%. Its physical meaning is that 50% of the particles are larger than it, and 50% of the particles are smaller than it. D50 is also called the median diameter or median diameter. The porosity of the first active substance layer 2, the porosity of the second active substance layer 4 and the porosity of the third active substance layer 6 are 35%, 40% and 45%, respectively. The thicknesses of the first active substance layer 2, the second active substance layer 4 and the third active substance layer 6 are 5 $\mu$m, 10 $\mu$m and 15 $\mu$m, respectively.

Each lithium supplement layer includes lithium-rich Lithium nickel oxide ($Li_2NiO_2$). The particle sizes D50 of the lithium supplementing materials in both the first lithium supplement layer 3 and the second lithium supplement layer 5 are 1.3 $\mu$m and 1.5 $\mu$m, respectively. The porosity of the first lithium supplement layer 3 and the porosity of the second lithium supplement layer 5 are 6% and 12%, respectively. The thicknesses of both the first lithium supplement layer 3 and the second lithium supplement layer 5 are 0.05μm and 0.1 μm, respectively.

It is further provided a manufacturing method of the above-described composite electrode according to embodiments, and the method includes steps (1) to (7).

At step (1), lithium iron phosphate and carbon black powder are mixed in a mass ratio of 96:4, and placed at an evaporation source; and the chamber in the first evaporation deposition apparatus is pumped to be a high vacuum state to $10^{-4} \sim 10^{-7}$ kPa. So, oxidative denaturation of the material is avoided in a high temperature environment; and vacuum evaporation deposition can provide a uniform atmosphere so that the coating layer can be deposited on the foil in a manner of a relatively uniform density and a relatively uniform structure. Further, it can ensure that the pressure within the chamber is controlled and monitored to achieve the desired evaporation deposition environment.

At step (2), the foil to be evaporated and deposited is conveyed to above the evaporation source by the unwinding device and the winding device, and the distance from the evaporation source is 25 cm; the material is heated to its sublimation temperature of 1000 °C by using an evaporation source heating device to sublimate this material to form a vapor, and the sublimated material vapor is deposited for 0.15h to the foil surface in a vacuum environment; and then nitrogen gas is introduced to cool and solidify the deposited material to obtain the active substance layer, namely the first active substance layer 2.

At step (3), the foil (i.e., the substrate to be evaporated and deposited) that is evaporated and deposited with the first active substance layer 2 is transferred to a second evaporation deposition apparatus, and lithium-rich lithium nickel ($Li_2NiO_2$) powders are placed at an evaporation source; the chamber of the evaporation deposition apparatus is re-pumped to be a high vacuum state to $10^{-4} \sim 10^{-7}$ kPa. So, reaction denaturation of the lithium supplement agent with oxygen is prevented at a high temperature environment; and the vacuum evaporation deposition can provide a uniform atmosphere so that the coating layer can be deposited on the substrate in a manner of a relatively uniform density and a relatively uniform structure.

At step (4), the substrate to be evaporated and deposited is conveyed to above the evaporation source by the unwinding device and the winding device, the distance from the evaporation source is 25 cm, the lithium supplement agent is heated to its sublimation temperature of 500 °C by using the evaporation source heating device, the lithium supplement agent vapor is deposited to the surface of the substrate to be evaporated and deposited in a vacuum environment for 0.15h after the lithium supplement agent is sublimated to form the vapor; nitrogen gas is then introduced to cool and solidify the deposited lithium supplement agent to obtain the lithium supplement layer, namely, the first lithium supplement layer 3.

At step (5), steps (1) and (2) are repeated, the mass ratio of the active substance to the conductive agent is adjusted to 97:3, the distance between the substrate to be evaporated and deposited and the evaporation source is adjusted to 20 cm, the temperature of the evaporation source is adjusted to 1 100°C, and the deposition time is adjusted to 0.1h, thereby obtaining the second active substance layer 4.

At step (6), steps (3) and (4) are repeated, the deposition time is adjusted to 0.15h, the distance between the substrate to be evaporated and deposited and the evaporation source is adjusted to 15cm, the temperature of the evaporation source is adjusted to 600°C, and the deposition time is adjusted to 0.1h, thereby obtaining the second lithium supplement layer 5.

At step (7), steps (1) and (2) are repeated, the mass ratio of the active substance to the conductive agent is adjusted to 98:2, the distance between the substrate to be evaporated and deposited and the evaporation source is adjusted to 15cm, the temperature of the evaporation source is adjusted to 1200°C, and the deposition time is adjusted to 0.05h, thereby obtaining the third active substance layer 6.

Example 2

It is provided a composite electrode according to this example, and the composite electrode is a positive electrode. The composite electrode includes a current collector 1 (i.e., an aluminum foil) and a composite material layer disposed on one side surface of the aluminum foil. The composite material layer includes five active substance layers and four lithium supplement layers alternately stacked. A first active substance layer, a first lithium supplement layer, a second active substance layer, a second lithium supplement layer, and a third active substance layer, a third lithium supplement layer, a fourth active substance layer, a fourth lithium supplement layer, and the fifth active substance layer are sequentially arranged in a direction away from the current collector.

Each active substance layer includes lithium iron phosphate positive active substances and carbon black conductive agents. The mass contents of the active substances in the first active substance layer, the second active substance layer, the third active substance layer, the fourth active substance layer, and the fifth active substance layer are 96%, 96.5%, 97%, 97.5% and 98%, respectively. A particle size D50 of the active substance in the first active substance layer, a particle size D50 of the active substance in the second active substance layer, a particle size D50 of the active substance in the third active substance layer, a particle size D50 of the active substance in the fourth active substance layer, a particle size D50 of the active substance in the fifth active substance layer are 0.6μm, 0.8μm, 1μm, 1.2μm and

1.4μm, respectively. A particle size of the carbon black conductive agent in each of the five active substance layers ranges from 0.01μm to 0.1μm. The porosity of the first active substance layer, the porosity of the second active substance layer, the porosity of the third active substance layer, the porosity of the fourth active substance layer, and the porosity of the fifth active substance layer are 35%, 37.5%, 40%, 42.5% and 45%, respectively. The thicknesses of the first active substance layer, the second active substance layer, the third active substance layer, the fourth active substance layer, and the fifth active substance layer are 2μm, 4μm, 6μm, 8μm and 10μm, respectively.

Each lithium supplement layer includes lithium-rich Lithium nickel oxide ($Li_2NiO_2$). The particle sizes D50 of the lithium supplementing materials in the first lithium supplement layer, the second lithium supplement layer, the third lithium supplement layer, and the fourth lithium supplement layer are 1.3μm, 1.4μm, 1.5μm and 1.6μm, respectively. The porosity of the first lithium supplement layer, the porosity of the second lithium supplement layer, the porosity of the third lithium supplement layer, and the porosity of the fourth lithium supplement layer are 6%, 8%, 10%, and 12%, respectively. The thicknesses of the first lithium supplement layer, the second lithium supplement layer, the third lithium supplement layer, and the fourth lithium supplement layer are 0.015μm, 0.03μm, 0.045μm, and 0.06μm, respectively.

It is further provided a method for manufacturing the above-described composite electrode according to embodiments, and the method includes steps (1) to (11).

At step (1), the lithium iron phosphate and the carbon black powder are mixed in a mass ratio of 96:4, and placed at an evaporation source; and the chamber in the first evaporation deposition apparatus is pumped to be a high vacuum state to $10^{-4} \sim 10^{-7}$kPa. So, oxidative denaturation of the material is avoided in a high temperature environment; and vacuum evaporation deposition can provide a uniform atmosphere so that the coating layer can be deposited on the foil in a manner of a relatively uniform density and a relatively uniform structure. Further, it can ensure that the pressure within the chamber is controlled and monitored to achieve the desired evaporation deposition environment.

At step (2), the foil to be evaporated and deposited is conveyed to above the evaporation source by the unwinding device and the winding device, and the distance from the evaporation source is 40cm; the material is heated to its sublimation temperature of 1000 °C by using an evaporation source heating device to sublimate this material to form a vapor, and the sublimated material vapor is deposited for 0.2h on the foil surface in a vacuum environment; and then nitrogen gas is introduced to cool and solidify the deposited material to obtain the active substance layer, namely the first active substance layer.

At step (3), the foil (i.e., the substrate to be evaporated and deposited) that is evaporated and deposited with the first active substance layer is transferred to a second evaporation deposition apparatus, and a lithium-rich lithium nickel ($Li_2NiO_2$) powder is placed at an evaporation source; the chamber of the evaporation deposition apparatus is re-pumped to be a high vacuum state to $10^{-4} \sim 10^{-7}$ kPa. So, reaction denaturation of the lithium supplement agent with oxygen is prevented at a high temperature environment; and the vacuum evaporation deposition can provide a uniform atmosphere so that the coating layer can be deposited on the substrate in a manner of a relatively uniform density and a relatively uniform structure.

At step (4), the substrate to be evaporated and deposited is conveyed to above the evaporation source by the unwinding device and the winding device, the distance from the evaporation source is 40cm, the lithium supplement agent is heated to its sublimation temperature of 1000°C by using the evaporation source heating device to sublimate to form the vapor, the sublimated lithium supplement agent vapor is deposited on the surface of the substrate to be evaporated and deposited in a vacuum environment for 0.1h; nitrogen gas is then introduced to cool and solidify the deposited lithium supplement agent to obtain the lithium supplement layer, namely, the first lithium supplement layer.

At step (5), steps (1) and (2) are repeated, the mass ratio of the active substance to the conductive agent is adjusted to 96.5:3.5, the distance between the substrate to be evaporated and deposited and the evaporation source is adjusted to 35 cm, the temperature of the evaporation source is adjusted to 1100°C, and the deposition time is adjusted to 0.17h, thereby obtaining the second active substance layer.

At step (6), steps (3) and (4) are repeated, the deposition time is adjusted to 0.17h, the distance between the substrate to be evaporated and deposited and the evaporation source is adjusted to 35 cm, the temperature of the evaporation source is adjusted to 1100°C, and the deposition time is adjusted to 0.17h, thereby obtaining the second lithium supplement layer.

At step (7), steps (1) and (2) are repeated, the mass ratio of the active substance to the conductive agent is adjusted to 97:3, the distance between the substrate to be evaporated and deposited and the evaporation source is adjusted to 30cm, the temperature of the evaporation source is adjusted to 1200°C, and the deposition time is adjusted to 0.14h, thereby obtaining the third active substance layer.

At step (8), steps (3) and (4) are repeated, the deposition time is adjusted to 0.14h, the distance between the substrate to be evaporated and deposited and the evaporation source is adjusted to 30cm, the temperature of the evaporation source is adjusted to 1200°C, and the deposition time is adjusted to 0.14h, thereby obtaining the third lithium supplement layer.

At step (9), steps (1) and (2) are repeated, the mass ratio of the active substance to the conductive agent is adjusted to 97.5: 2.5, the distance between the substrate to be evaporated and deposited and the evaporation source is adjusted to 25cm, the temperature of the evaporation source is adjusted to 1300°C, and the deposition time is adjusted to 0.11h, thereby obtaining the fourth active substance layer.

At step (10), steps (3) and (4) are repeated, the deposition time is adjusted to 0.11h, the distance between the substrate to be evaporated and deposited and the evaporation source is adjusted to 25cm, the temperature of the evaporation source is adjusted to 1300°C, and the deposition time is adjusted to 0.11h, thereby obtaining the fourth lithium supplement layer.

At step (11), steps (1) and (2) are repeated, the mass ratio of the active substance to the conductive agent is adjusted to 98:2, the distance between the substrate to be evaporated and deposited and the evaporation source is adjusted to 20 cm, the temperature of the evaporation source is adjusted to 1400°C, and the deposition time is adjusted to 0.08h, thereby obtaining the fifth active substance layer.

Example 3

It is provided a composite electrode according to this example, and the composite electrode is a negative electrode. The composite electrode includes a current collector (i.e., a copper foil) and a composite material layer disposed on one side surface of the copper foil. The composite material layer includes three active substance layers and two lithium supplement layers alternately stacked. A first active substance layer, a first lithium supplement layer, a second active substance layer, a second lithium supplement layer, and a third active substance layer are sequentially arranged in a direction away from the current collector.

Each active substance layer includes lithium iron phosphate positive active substances and carbon black conductive agents. The mass contents of the active substances in the first active substance layer, the second active substance layer and the third active substance layer are 96%, 97% and 98%, respectively. A particle size D50 of the active substance in the first active substance layer, a particle size D50 of the active substance in the second active substance layer and a particle size D50 of the active substance in the third active substance layer are 15μm, 16μm and 17μm, respectively. A particle size of the carbon black conductive agent in each of the three active substance layers ranges from 0.01μm to 0.1μm. The porosity of the first active substance layer, the porosity of the second active substance layer and the porosity of the third active substance layer are 35%, 40% and 45%, respectively. The thicknesses of the first active substance layer, the second active substance layer and the third active substance layer are 5μm, 10μm and 15μm, respectively.

Each lithium supplement layer includes metallic lithium. The particle sizes D50 of the lithium supplementing materials in both the first lithium supplement layer and the second lithium supplement layer are 0.04μm and 0.06μm, respectively. The porosity of the first lithium supplement layer and the porosity of the second lithium supplement layer are 6% and 12%, respectively. The thicknesses of the first lithium supplement layer and the second lithium supplement layer are 0.05μm and 0.1μm, respectively.

It is further provided a method for manufacturing the above-described composite electrode according to embodiments, and the method includes steps (1) to (7).

At step (1), the lithium iron phosphate and the carbon black powder are mixed in a mass ratio of 96:4, and placed at an evaporation source; and the chamber in the first evaporation deposition apparatus is pumped to be a high vacuum state to $10^{-4}$~$10^{-7}$kPa. So, oxidative denaturation of the material is avoided in a high temperature environment; and vacuum evaporation deposition can provide a uniform atmosphere so that the coating layer can be deposited on the foil in a manner of a relatively uniform density and a relatively uniform structure. Further, it can ensure that the pressure within the chamber is controlled and monitored to achieve the desired evaporation deposition environment.

At step (2), the foil to be evaporated and deposited is conveyed to above the evaporation source by the unwinding device and the winding device, and the distance from the evaporation source is 25 cm; the material is heated to its sublimation temperature of 800°C by using an evaporation source heating device to sublimate this material to form a vapor, and the sublimated material vapor is deposited for 0.15h to the foil surface in a vacuum environment; and then nitrogen gas is introduced to cool and solidify the deposited material to obtain the active substance layer, namely the first active substance layer.

At step (3), the foil (i.e., the substrate to be evaporated and deposited) that is evaporated and deposited with the first active substance layer is transferred to a second evaporation deposition apparatus, and a lithium supplement agent powder is placed at an evaporation source and the lithium supplement agent is metallic lithium; the chamber of the evaporation deposition apparatus is re-pumped to be a high vacuum state to $10^{-4}$~$10^{-7}$kPa. So, reaction denaturation of the lithium supplement agent with oxygen is prevented at a high temperature environment; and the vacuum evaporation deposition can provide a uniform atmosphere so that the coating layer can be deposited on the substrate in a manner of a relatively uniform density and a relatively uniform structure.

At step (4), the substrate to be evaporated and deposited is conveyed to above the evaporation source by the unwinding device and the winding device, the distance from the evaporation source is 25 cm, the lithium supplement agent is heated to its sublimation temperature of 1800°C by using the evaporation source heating device to sublimate to form the vapor, the sublimated lithium supplement agent vapor is deposited on the surface of the substrate to be evaporated and deposited in a vacuum environment for 0.15h; nitrogen gas is then introduced to cool and solidify the deposited lithium supplement agent to obtain the lithium supplement layer, namely, the first lithium supplement layer.

At step (5), steps (1) and (2) are repeated, the mass ratio of the active substance to the conductive agent is adjusted to 97:3, the distance between the substrate to be evaporated and deposited and the evaporation source is adjusted to 20 cm, the temperature of the evaporation source is adjusted to 900°C, and the deposition time is adjusted to 0.1h, thereby obtaining the second active substance layer.

At step (6), steps (3) and (4) are repeated, the deposition time is adjusted to 0.1h, the distance between the substrate to be evaporated and deposited and the evaporation source is adjusted to 20cm, the temperature of the evaporation source is adjusted to 2000°C, and the deposition time is adjusted to 0.1h, thereby obtaining the second lithium supplement layer.

At step (7), steps (1) and (2) are repeated, the mass ratio of the active substance to the conductive agent is adjusted to 98:2, the distance between the substrate to be evaporated and deposited and the evaporation source is adjusted to 15cm, the temperature of the evaporation source is adjusted to 1000°C, and the deposition time is adjusted to 0.05h, thereby obtaining the third active substance layer.

Example 4

This Example differs from Example 1 in that the thickness of the first lithium supplement layer is adjusted to $0.5\mu m$, and the thickness of the second lithium supplement layer is adjusted to $1\mu m$. The rest are exactly the same as in Example 1.

Example 5

This Example differs from Example 1 in that the thickness of the first lithium supplement layer is adjusted to $0.02\mu m$, and the thickness of the second lithium supplement layer is adjusted to $0.04\mu m$. The rest are exactly the same as in Example 1.

Example 6

This Example differs from Example 1 in that the thicknesses of the first lithium supplement layer and the second lithium supplement layer are the same, which are both $0.1\ \mu m$. The rest are exactly the same as in Example 1.

Example 7

The present Example differs from Example 1 in that the particle sizes D50 of the lithium supplementing materials in both the first lithium supplement layer and the second lithium supplement layer are the same, which are $1.3\mu m$. The rest are exactly the same as in Example 1.

Example 8

This Example differs from Example 1 in that the mass contents of the active substances of the first active substance layer, the second active substance layer and the third active substance layer are the same, which are all 96%. The rest are exactly the same as in Example 1.

Example 9

This Example differs from Example 1 in that the thicknesses of the first active substance layer, the second active substance layer and the third active substance layer are the same, which are all $10\mu m$. The rest are exactly the same as in Example 1.

Example 10

This Example differs from Example 1 in that the particle sizes D50 of substances in all of the first active substance layer, the second active substance layer and the third active substance layer are the same, which are all $1\mu m$. The rest are exactly the same as in Example 1.

Example 11

This Example differs from Example 1 in that the porosity of the first active substance layer, the porosity of the second active substance layer, and the porosity of the third active substance layer are the same, which are all 35%. The rest are exactly the same as in Example 1.

Comparative Example 1

This comparative Example differs from Example 1 in that the porosity of the first lithium supplement layer and the porosity the second lithium supplement layer are the same, both of which are 12%. The rest are exactly the same as in Example 1.

Comparative Example 2

The present comparative example differs from Example 1 in that the composite material layer includes two active substance layers and one lithium supplement layer arranged in an alternating stack, in which the two active substance layers are a first active substance layer and a second active substance layer, and the one lithium supplement layer is a first lithium supplement layer. The rest are exactly the same as in Example 1.

Comparative Example 3

It is provided a positive electrode according to this comparative example. The positive electrode includes an aluminum foil and an active substance layer disposed on one surface of the aluminum foil. The active substance layer includes $LiFePO_4$, carbon black, $Li_2NiO_2$ and polyvinylidene fluoride (PVDF) in a mass ratio of 7:1:1:1.

Comparative Example 4

It is provided a negative electrode according to the present comparative example. The negative electrode includes a copper foil and an active substance layer disposed on one side surface of the copper foil. The active substance layer includes graphite and carbon black in a mass ratio of 97:3. The ultra-thin lithium strip and the active substance layer are supplement with lithium in a calendering and compounding manner.

Performance test

The positive electrodes provided in Examples 1 to 2, Examples 4 to 11, and Comparative Examples 1 to 3 were assembled into a lithium-ion battery, in which the cathode was a graphite electrode, the electrolyte was a Lithium Hexafluorophosphate ($LiPF_6$) electrolyte, and the separator was polyethylene.
The negative electrodes provided in Examples 3 to 4 were assembled into a lithium-ion battery, in which the anode was a lithium iron phosphate electrode, the electrolyte was a Lithium Hexafluorophosphate ($LiPF_6$) electrolyte, and the separator was polyethylene.
The above assembled lithium-ion batteries were tested.

(1) First charge/discharge efficiency test

The tested battery after being manufactured was placed in a thermostat, and the temperature of the thermostat was controlled to $23°C \pm 2°C$. After standing for 2h~12h, the battery was tested by using a lithium-ion battery electrochemical performance tester. The charge and discharge rule is as follows.

a) Charge limit voltage: the battery is charged to 3.65V at 0.1C rate in a constant current manner, and then is charged in a constant voltage manner, in which the cutoff current is 0.05C under a constant voltage charge condition.

b) Discharge final voltage: the battery is discharged to 2.0V at 0.1C rate in a constant current manner.

The charge and discharge current at tC rate in a constant current manner can be calculated based on a following formula:

$$I_t = m \times C_0 \times t;$$

Here, It denotes a charge and discharge current in a constant current manner, and it is in units of mA; m denotes a mass of an active substance (such as lithium iron phosphate or graphite) in a battery in units of g; $C_0$ denotes a theoretical specific capacity of the active substance in units of mA·h/g; t denotes the number of multiplying power that charge or discharge is completed in 1/t time, in units of /h, referred to herein as 0.1/h.

c) Data records

After one week of charge and discharge cycles of the tested battery, the charge and discharge capacities were recorded, and the first charge/discharge efficiency of the battery was calculated. The first charge/discharge efficiency of the lithium iron phosphate is calculated based on the following formula:

$$\eta = \frac{Q_{ID}}{Q_{IC}} \times 100\%;$$

Here, $Q_{ID}$ and $Q_{IC}$ denote the first discharge capacity and the first charge capacity, respectively, of the battery in the charge/discharge test at a current denoted by It.

(2) Cycle life test

After the capacity of the battery was divided, the battery was cyclically tested by using a lithium-ion battery electrochemical performance tester, and the charge/discharge voltage limit was as follows.

a) Charge limit voltage: the battery is charged to 3.65V in a constant-current and constant-voltage manner, and the charge cutoff current is 0.05C in a constant-voltage manner.

b) Discharge final voltage: 2.5V

c) Charge and discharge rule: charge and discharge cycles were performed at ambient temperature of $(23\pm2)$ °C by using 1C/1C, as specified in the standard GB/T18287.

d) Data records: charge and discharge capacities at different cycle times are recorded during the tested battery is cycled, in which the discharge capacity at which the battery is discharged to the final voltage at the first cycle is denoted as $Q_1$, and the discharge capacity at which the battery is discharged to the final voltage at the n-th cycle is denoted as $Q_n$. The capacity retention rate $\eta$ at the 1500-th cycle was calculated based on the following formula: $\eta=(Q_{1500}/Q_1)\times 100\%$.

The test results are shown in Table 1.

Table 1

| Item | First charge/discharge efficiency | capacity retention rate at 1500-th cycle |
|---|---|---|
| Example 1 | 95.51% | 96.87% |
| Example 2 | 95.72% | 97.56% |
| Example 3 | 95.46% | 96.35% |
| Example 4 | 95.83% | 92.32% |
| Example 5 | 94.14% | 94.20% |
| Example 6 | 94.22% | 93.03% |
| Example 7 | 95.02% | 93.45% |
| Example 8 | 95.06% | 93.28% |
| Example 9 | 95.12% | 93.41% |

(continued)

| Item | First charge/discharge efficiency | capacity retention rate at 1500-th cycle |
|---|---|---|
| Example 10 | 93.56% | 91.25% |
| Example 11 | 93.45% | 91.57% |
| Comparative Example 1 | 94.22% | 93.25% |
| Comparative Example 2 | 94.02% | 93.61% |
| Comparative Example 3 | 92.41% | 87.55% |
| Comparative Example 4 | 92.84% | 88.01% |

Analysis

As can be seen from the data of Examples 1 to 3 and Comparative Examples 3 to 4, by alternately stacking the active substance layers and the lithium supplement layers, and by setting gradient parameters, the first charge/discharge efficiency of the battery assembled by the composite electrodes can be improved, the initial capacity loss can be reduced, the capacity retention rate of the battery can be improved, and the cycle performance can be improved.

As can be seen from the data of Example 1 and Examples 4 to 5, if the thickness of each lithium supplement layer is relatively thick, the retention rate of the battery capacity is slightly lower and the cycle performance is slightly poor. If the thickness of each lithium supplement layer is thinner, the first charge/discharge efficiency of the battery is slightly lower, the initial capacity is lost, the retention rate of the capacity is slightly lower, and the cycle performance is slightly poor.

As can be seen from the data of Examples 1 and 6 to 7, if the thicknesses of the first lithium supplement layer and the second lithium supplement layer are the same, no gradient is formed, and thus the first charge/discharge efficiency and the cycle performance of the battery assembled by the composite electrodes are reduced. If the lithium supplementing materials of the first lithium supplement layer and the second lithium supplement layer have the same particle sizes, no gradient is formed, and thus the cycle life of the battery is reduced.

As can be seen from the data of Example 1 and Examples 8 to 11, if the mass content, the thickness, and the porosity of the active substance of each of the first active substance layer, the second active substance layer, and the third active substance layer are the same, no gradient is formed, thereby resulting in a decrease in the cycling performance of the battery.

As can be seen from the data of Example 1 and Comparative Example 1, if the porosity of the first lithium supplement layer and the porosity of the second lithium supplement layer are the same, no gradient is formed, which affects the intercalation or reverse extraction of lithium ions from the surface of the electrode into the interior of the electrode, and reduces the first charge/discharge efficiency of the battery assembled by the composite electrodes.

As can be seen from the data of Example 1 and Comparative Example 2, if the composite material layer includes only two active substance layers and one lithium supplement layer staked alternatively, the cycle performance of the battery is reduced.

From the data of Example 1 and Comparative Example 3, it can be seen that the conventional blending method for supplementing lithium in the positive electrode may result in a decrease in the cycling performance of the battery.

From the data of Example 1 and Comparative Example 4, it can be seen that the conventional calendering and compounding method for supplementing lithium in the negative electrode may result in a decrease in the first charge/-discharge efficiency of the battery assembled by the composite electrodes.

**Claims**

1. A composite electrode, comprising:

   a current collector; and
   a composite material layer disposed on at least one side surface of the current collector,
   wherein the composite material layer comprises n-layer active substance layers and n-1-layer lithium supplement layers that are stacked at intervals, wherein n is greater than or equal to 3 and n is an integer;
   a side of the composite material layer which is adjacent to the current collector is one of the n-layer active substance layers;
   porosity of the n-1-layer lithium supplement layers increases gradually along a direction away from the current collector.

2.  The composite electrode according to claim 1, wherein porosity of the n-layer active substance layers each ranges from 35% to 45%.

3.  The composite electrode according to claim 1 or 2, wherein porosity of the n-layer active substance layers gradually increases in the direction away from the current collector.

4.  The composite electrode according to any one of claims 1 to 3, wherein active material of the n-layer active substance layers comprises active substances and conductive agents;
    content of the active substances of the n-layer active substance layers increases gradually in the direction away from the current collector.

5.  The composite electrode according to claim 4, wherein the particle sizes D50 of the active substances of the n-layer active substance layers increase in the direction away from the current collector.

6.  The composite electrode according to any one of claims 1 to 5, wherein a thickness of each of the n-layer active substance layers ranges from $3\mu$m to $30\mu$m.

7.  The composite electrode according to any one of claims 1 to 6, wherein thicknesses of the n-layer active substance layers increases gradually in the direction away from the current collector.

8.  The composite electrode according to any one of claims 1 to 7, wherein porosity of each of the n-1-layer lithium supplement layers ranges from 5% to 20%.

9.  The composite electrode according to any one of claims 1 to 8, wherein lithium supplementing materials in the n-1-layer lithium supplement layers each comprise metallic lithium or a lithium-containing compound.

10. The composite electrode according to any one of claims 1 to 9, wherein particle sizes of lithium supplementing materials of the n-1-layer lithium supplement layers increase gradually in the direction away from the current collector.

11. The composite electrode according to any one of claims 1 to 10, wherein a thickness of each of the n-1-layer lithium supplement layers ranges from $0.02\mu$m to $1\mu$m.

12. The composite electrode according to any one of claims 1 to 11, wherein thicknesses of the n-1-layer lithium supplement layers increase gradually in the direction away from the current collector.

13. A manufacturing method of a composite electrode according to any one of claims 1 to 12, the manufacturing method comprising:

    evaporating and depositing active material onto at least one side surface of the current collector to form an active substance layer;
    evaporating and depositing a lithium supplement material onto a surface of the active substance layer to form a lithium supplement layer;
    evaporating and depositing the active material onto a surface of the lithium supplement layer to form an active substance layer;
    alternately and repeatedly performing an operation of evaporating and depositing a lithium supplement material onto a surface of the active substance layer and an operation of evaporating and depositing active material onto a surface of the lithium supplement layer at n-2 times to obtain the composite electrode comprising n-layer active substance layers and n-1-layer lithium supplement layers; wherein n is greater than or equal to 3 and n is an integer; and porosity of the n-1-layer lithium supplement layers increases gradually along a direction away from the current collector.

14. The manufacturing method according to claim 13, wherein, when the active material is evaporated and deposited, or when the lithium supplement material is evaporated and deposited, a temperature of an evaporation source ranges from 500°C to 2500°C; and/or
    when the active material is evaporated and deposited, or when the lithium supplement material is evaporated and deposited, a distance between a substrate to be evaporated and deposited and the evaporation source ranges from 10 centimeter (cm) to 50 cm.

15. A lithium-ion battery, wherein the lithium-ion battery comprises the composite electrode according to any one of claims 1 to 12.

5 ⌐
3 ⌐

6
4
2

1

# FIG. 1

| 1 | Evaporate and deposite an active material onto at least one side surface of a current collector to form an active substance layer |
| 2 | Evaporate and deposite a lithium supplement material onto a surface of the active substance layer formed at step 1 to form a lithium supplement layer |
| 3 | Evaporate and deposite the active material onto a surface of the lithium supplement layer formed at step 2 to form an active substance layer |
| 4 | Perform alternately and repeatedly step 2 and step 3 at n-2 times to obtain the composite electrode including n-layer active substance layers and n-1-layer lithium supplement layers, wherein porosity of the n-1-layer lithium supplement layers increases gradually along a direction away from the current collector |

# FIG. 2

Europäisches
Patentamt
European
Patent Office
Office européen
des brevets

# EUROPEAN SEARCH REPORT

**Application Number**

EP 24 16 6387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/057733 A1 (BREWER JOHN C [US] ET AL) 25 February 2021 (2021-02-25) <br> * figures 1A, 1B,3 * <br> * paragraphs [0022] - [0091] * <br> ----- | 1-15 | INV. <br> H01M4/04 <br> H01M4/139 <br> H01M10/0525 <br> H01M4/131 |
| A | CN 115 472 771 A (ZHUHAI COSMX BATTERY CO LTD) 13 December 2022 (2022-12-13) <br> * figures 1-3 * <br> * Detailed description * <br> ----- | 1-15 | ADD. <br> H01M4/02 |
| A | US 2022/085361 A1 (SHENG CHANGLIANG [CN] ET AL) 17 March 2022 (2022-03-17) <br> * paragraphs [0087] - [0157] * <br> * figures 1-12 * <br> ----- | 1-15 | |
| A | US 2021/050584 A1 (BREWER JOHN C [US] ET AL) 18 February 2021 (2021-02-18) <br> * figures 1-8 * <br> * paragraphs [0048] - [0103] * <br> ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 13 September 2024 | Kelly, Michael |

EPO FORM 1503 03.82 (P04C01)

2

## ANNEX TO THE EUROPEAN SEARCH REPORT
## ON EUROPEAN PATENT APPLICATION NO.

EP 24 16 6387

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | Publication date | Patent family member(s) | | Publication date |
|---|---|---|---|---|
| US 2021057733 A1 | 25-02-2021 | US | 2021057733 A1 | 25-02-2021 |
| | | US | 2023014638 A1 | 19-01-2023 |
| CN 115472771 A | 13-12-2022 | NONE | | |
| US 2022085361 A1 | 17-03-2022 | CN | 112018324 A | 01-12-2020 |
| | | CN | 113488613 A | 08-10-2021 |
| | | EP | 3951930 A1 | 09-02-2022 |
| | | US | 2022085361 A1 | 17-03-2022 |
| | | WO | 2020238628 A1 | 03-12-2020 |
| US 2021050584 A1 | 18-02-2021 | CA | 3148019 A1 | 18-02-2021 |
| | | CN | 114467209 A | 10-05-2022 |
| | | EP | 4014272 A1 | 22-06-2022 |
| | | JP | 2022544959 A | 24-10-2022 |
| | | KR | 20220038808 A | 29-03-2022 |
| | | US | 2021050584 A1 | 18-02-2021 |
| | | US | 2021050591 A1 | 18-02-2021 |
| | | US | 2021050593 A1 | 18-02-2021 |
| | | US | 2022376220 A1 | 24-11-2022 |
| | | US | 2023063959 A1 | 02-03-2023 |
| | | US | 2023268511 A1 | 24-08-2023 |
| | | WO | 2021030461 A1 | 18-02-2021 |

EPO FORM P0459

For more details about this annex : see Official Journal of the European Patent Office, No. 12/82

**REFERENCES CITED IN THE DESCRIPTION**

**Patent documents cited in the description**

- GB 18287 T